# EUROPEAN PATENT APPLICATION

(11) **EP 4 793 565 A1**
(43) Date of publication of application: **19.08.2026**
(21) Application number: 24891606.6
(22) Date of filing: 20.08.2024
(51) Int. Cl.: F24F 12/00, F24F 13/28, F24F 13/14, B01D 46/70, F24F 13/20, F24F 7/08

(54) **VENTILATION APPARATUS**

(30) Priority: 15.11.2023 KR 20230158458
(71) Applicant: LG Electronics Inc., Yeongdeungpo-gu Seoul 07336 (KR)
(72) Inventor: LEE, Jinwoo, Seoul 08592 (KR); JEONG, Yongki, Seoul 08592 (KR); PARK, Janghee, Seoul 08592 (KR); KIM, Kyungrock, Seoul 08592 (KR); PARK, Taeju, Seoul 08592 (KR)
(74) Representative: Vossius & Partner Patentanwälte Rechtsanwälte mbB
(86) International application number: PCT/KR2024/012331
(87) International publication number: WO 2025/105657

(57) **Abstract**

A ventilation apparatus according to an embodiment of the present invention includes a main case in which an outdoor air inlet and an indoor air outlet are formed on one side, and an indoor air inlet and an outdoor air outlet are formed on another side opposite to the one side; an air purification module accommodated inside the main case and including a total heat exchange element; an intake fan module disposed inside the main case and having a discharge port connected to the outdoor air outlet; an exhaust fan module disposed inside the main case and having a discharge port connected to the indoor air outlet; and a filtering kit mounted on the other side of the main case where the outdoor air inlet is formed and communicating with the outdoor air inlet, wherein inside the main case, an indoor air exhaust flow path connecting the indoor air inlet, the air purification module, the exhaust fan module, and the indoor air outlet; a bypass flow path connecting the indoor air inlet and the exhaust fan module; an outdoor air intake flow path connecting the outdoor air inlet, the air purification module, the intake fan module, and the outdoor air outlet; an exhaust flow switching space defined between the discharge port of the exhaust fan module and the indoor air outlet; a bypass hole connecting the exhaust flow switching space and one end of the bypass flow path; and a sub bypass hole connecting another end of the bypass flow path and the outdoor air intake flow path are formed.

## Description

### [Technical Field]

The present invention relates to a ventilation apparatus.

### [Background Art]

A ventilation apparatus is an apparatus for discharging indoor air to the outside and supplying fresh outdoor air to the indoor, and includes, as a main component, a heat exchange element that allows only heat exchange to be performed without mixing the discharged indoor air and the introduced outdoor air.

Recently, a hybrid ventilation apparatus capable of additionally performing a cooling and heating function in addition to a ventilation function through heat exchange has been introduced.

In the prior art below, there is disclosed a configuration in which an insect inflow blocking kit for preventing foreign substances including insects from being introduced into a ventilation apparatus is connected to an outdoor air inlet side.

Such a conventional ventilation apparatus provides a separate kit for capturing foreign substances including dust or insects, but has a disadvantage in that a processing operation for emptying the foreign substances collected in the kit must be separately performed by a user or a serviceman later.

In addition, since a ventilation apparatus is generally installed at a high position such as a veranda ceiling, a user must perform an operation of separating the kit while climbing onto a chair or a ladder. Accordingly, there is a disadvantage in that it is considerably difficult for the user to perform an operation of emptying the kit, and there is a high risk that the user may fall and be injured during the processing operation.

Prior Art Document: Korean Patent Publication No. 10-2023-0099471 (2023.07.04)

### [Disclosure]

### [Technical Problem]

The present invention is proposed to improve the above-described problems.

### [Technical Solution]

A ventilation apparatus according to an embodiment of the present invention for achieving the above-described object includes: a main case in which an outdoor air inlet and an indoor air outlet are formed on one side surface, and an indoor air inlet and an outdoor air outlet are formed on another side surface facing the one side surface; an air purification module accommodated in the main case and including a total heat exchange element; a suction fan module disposed inside the main case and having an outlet connected to the outdoor air outlet; an exhaust fan module disposed inside the main case and having an outlet connected to the indoor air outlet; and a filtering kit mounted on the other side surface of the main case on which the outdoor air inlet is formed and communicating with the outdoor air inlet, wherein inside the main case, there are formed: an indoor air exhaust flow path connecting the indoor air inlet, the air purification module, the exhaust fan module, and the indoor air outlet; a bypass flow path connecting the indoor air inlet and the exhaust fan module; an outdoor air intake flow path connecting the outdoor air inlet, the air purification module, the suction fan module, and the outdoor air outlet; an exhaust flow switching space defined between the outlet of the exhaust fan module and the indoor air outlet; a bypass hole connecting the exhaust flow switching space and one end of the bypass flow path; and a sub bypass hole connecting the other end of the bypass flow path and the outdoor air intake flow path.

### [Advantageous Effects]

According to the ventilation apparatus according to the embodiment of the present invention having the above configuration, since a filtering kit for filtering foreign substances is mounted at the outdoor air inlet of the ventilation apparatus, various foreign substances including dust and insects can be prevented from penetrating into the inside of the ventilation apparatus by the filtering kit.

In addition, when the exhaust fan module is operated to remove foreign substances collected in the filtering kit, indoor air flows in a reverse direction along the bypass flow path and is discharged to the outside through the outdoor air inlet. In this process, foreign substances accumulated in the filtering kit are discharged to the outside of the ventilation apparatus together with the discharged indoor air, so that there is an advantage in that a separate cleaning operation of the filtering kit by a user or a serviceman is not required.

### [Description of Drawings]

FIG. 1 is a bottom perspective view of a ventilation apparatus according to an embodiment of the present invention.
FIG. 2 is an exploded perspective view of the ventilation apparatus.
FIG. 3 is a bottom view showing an internal configuration of the ventilation apparatus.
FIG. 4 is a cross-sectional perspective view of the ventilation apparatus taken along line 4-4 of FIG. 1.
FIG. 5 is a bottom perspective view of a main case constituting the ventilation apparatus according to an embodiment of the present invention.
FIG. 6 is a bottom perspective view of a middle case constituting the main case of the ventilation apparatus according to an embodiment of the present invention.
FIG. 7 is a plan perspective view of the middle case.
FIG. 8 is a bottom perspective view of an upper case constituting the main case of the ventilation apparatus according to an embodiment of the present invention.
FIG. 9 is a bottom view of the main case.
FIG. 10 is a view showing a state in which a lower case is separated from a bottom surface of the main case.
FIG. 11 is a bottom perspective view of the lower case.
FIG. 12 is a bottom perspective view of a drain pan coupled to the lower case of the ventilation apparatus according to an embodiment of the present invention.
FIG. 13 is a plan perspective view of the drain pan.
FIG. 14 is a plan view showing the ventilation apparatus according to an embodiment of the present invention in which a filtering kit is mounted at an outdoor air inlet.
FIG. 15 is a rear perspective view of the filtering kit according to an embodiment of the present invention.
FIG. 16 is a longitudinal cross-sectional view of the filtering kit taken along line 16-16 of FIG. 15.
FIG. 17 is a bottom perspective view of a middle case in which a bypass hole is formed.
FIG. 18 is a perspective view showing a structure and an operation of a switching damper module selectively shielding the bypass hole and the indoor air outlet.
FIG. 19 is a perspective view of a second damper unit showing a state in which a sub bypass hole formed in the second damper unit is closed by a sub damper unit according to an embodiment of the present invention.
FIG. 20 is a perspective view of the second damper unit showing a state in which the sub bypass hole is opened by the sub damper unit.
FIG. 21 is a side view of the second damper unit in a state in which the sub bypass hole is opened.
FIG. 22 is a view showing an air flow occurring inside the ventilation apparatus in a foreign substance cleaning mode.

### [Mode for Invention]

Hereinafter, a ventilation apparatus according to an embodiment of the present invention will be described in detail with reference to the drawings.

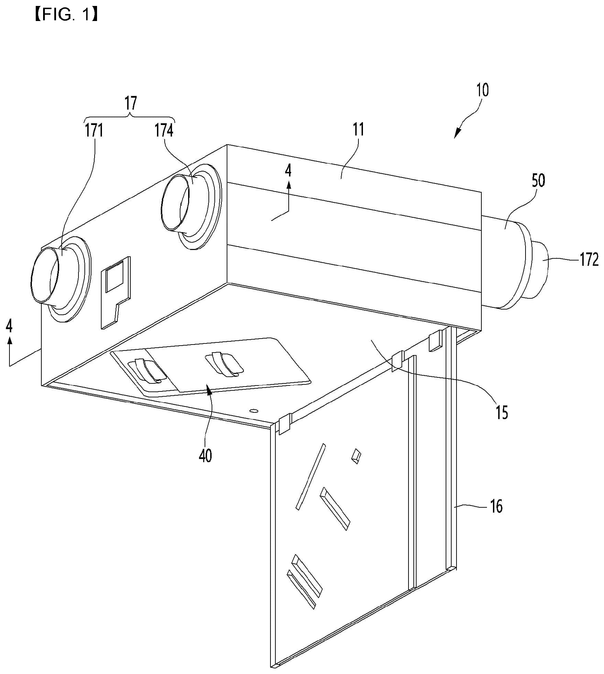

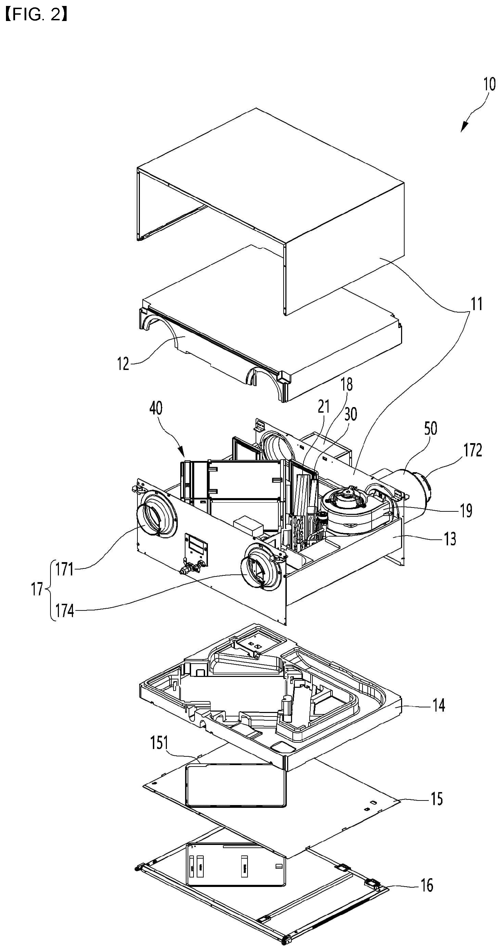

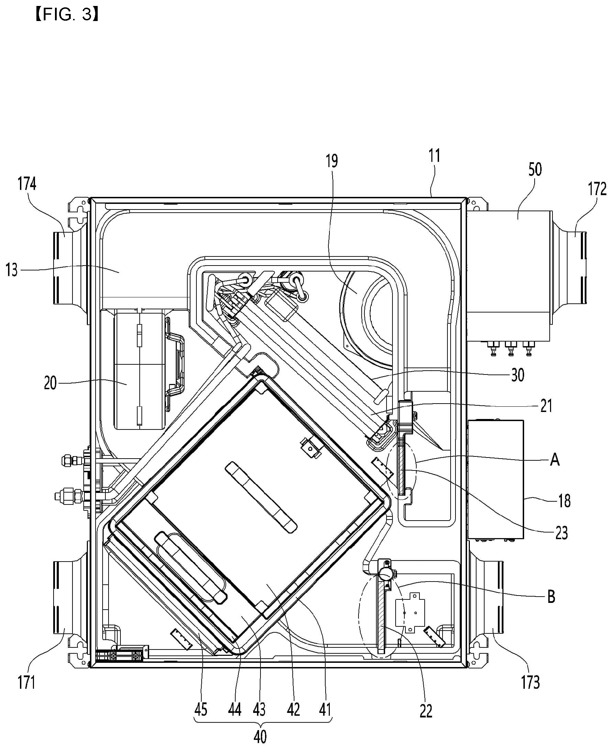

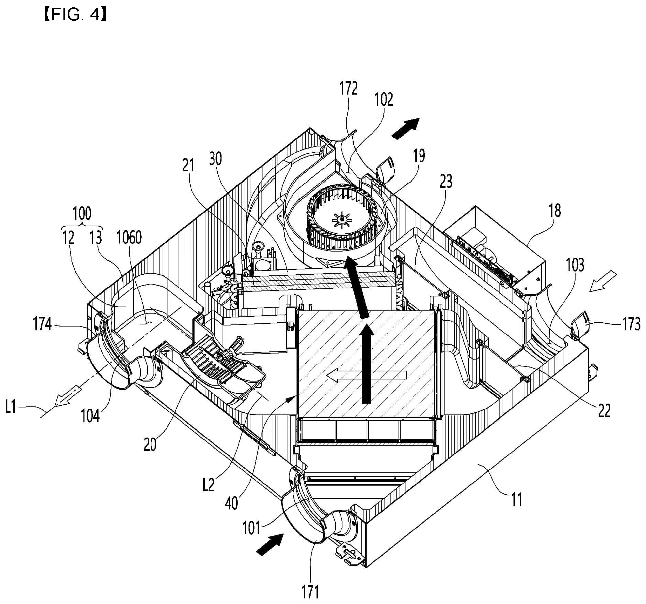

FIG. 1 is a bottom perspective view of a ventilation apparatus according to an embodiment of the present invention, FIG. 2 is an exploded perspective view of the ventilation apparatus, FIG. 3 is a bottom view showing an internal configuration of the ventilation apparatus, and FIG. 4 is a cross-sectional perspective view of the ventilation apparatus taken along line 4-4 of FIG. 1.

Referring to FIGS. 1 to 4, a ventilation apparatus 10 according to an embodiment of the present invention is mainly installed on a ceiling, and a user mainly recognizes a bottom surface of the ventilation apparatus 10.

In addition, the user may open a cover provided on the bottom surface of the ventilation apparatus 10 as shown in FIG. 1 to separate or replace an air purification module.

Specifically, the ventilation apparatus 10 according to an embodiment of the present invention includes a housing 11 having a hexahedral shape forming an exterior and having a bottom surface opened, a shield cover 16 covering the opened bottom surface of the housing 11, and a plurality of duct flanges 17 respectively mounted on two side surfaces of the housing 11 facing each other.

Outdoor air inlet 101 and indoor air outlet 104 are respectively formed at both ends of one side surface of the housing 11. In addition, indoor air inlet 103 and outdoor air discharge outlet 102 are respectively formed at both ends of the other side surface of the housing 11 facing the one side surface.

In addition, the outdoor air inlet 101 and the indoor air inlet 103 are formed at positions facing each other, and the indoor air outlet 104 and the outdoor air discharge outlet 102 are formed at positions facing each other.

In addition, outdoor air introduced through the outdoor air inlet 101 is discharged into the indoor through the outdoor air discharge outlet 102 located in a diagonal direction, and indoor air introduced through the indoor air inlet 103 is discharged to the outdoor through the indoor air outlet 104 located in a diagonal direction. This is because the outdoor air and the indoor air flow in directions crossing each other when passing through components accommodated in the housing 11, among which an air purification module to be described later.

Meanwhile, the duct flange 17 includes an outdoor air inlet flange 171 mounted on the outdoor air inlet 101, an outdoor air discharge flange 172 mounted on the outdoor air discharge outlet 102, an indoor air inlet flange 173 mounted on the indoor air inlet 103, and an indoor air exhaust flange 174 mounted on the indoor air outlet 104.

Optionally, a heating device 50 may be mounted on the outdoor air discharge outlet 102. When the heating device 50 is mounted on the outdoor air discharge outlet 102, the outdoor air discharge flange 172 may be mounted on an outlet of the heating device 50.

In addition, the ventilation apparatus 10 further includes a case accommodated inside the housing 11 and a lower cover 15 provided between the case and the shield cover 16 to cover a bottom surface of the case. A through hole 151 through which the air purification module to be described later passes is formed in the lower cover 15.

The case includes a lower case 14, a middle case 13, and an upper case 12, and a combined body of the upper case 12 and the middle case 13 may be defined as a main case 100. The lower cover 15 is mounted on a bottom surface of the lower case 14 and is shielded by the shield cover 16. In addition, the shield cover 16 is rotatably coupled to the housing 11 to selectively shield the lower cover 15.

The ventilation apparatus 10 further includes an air purification module 40 installed inside the case, a cooling module, and a fan module. The cooling module includes components constituting a refrigerant cycle using a refrigerant as a circulating fluid, and includes at least an evaporator 21 through which a low-temperature lowpressure two-phase refrigerant flows. In addition, the evaporator 21 may be positioned on an outlet side of the air purification module 40.

The fan module includes a suction fan module 19 that sucks outdoor air and discharges the outdoor air into the indoor, and an exhaust fan module 20 that sucks indoor air and exhausts the indoor air to the outdoor. The fan module includes a fan and a motor for rotating the fan module.

The suction fan module 19 is disposed at a position where the outdoor air discharge outlet 102 is formed so that an outlet of the suction fan module 19 is connected to the outdoor air discharge outlet 102. In addition, the exhaust fan module 20 is disposed at a position where the indoor air outlet 104 is formed so that an outlet of the exhaust fan module 20 is connected to the indoor air outlet 104.

The air purification module 40 includes a module frame 41 and a heat exchange element 42 accommodated inside the module frame 41. Optionally, the air purification module 40 may further include at least one of a HEPA filter 43, a pre-filter 44, and a light filter 45. The light filter 45 refers to a filter that removes harmful bacteria such as mites attached to outdoor air sucked into the air purification module 40 or the pre-filter 44 using ultraviolet rays emitted from a UV lamp.

In the air purification module 40, the light filter 45, the pre-filter 44, the HEPA filter 43, and the heat exchange element 42 are sequentially arranged from a side close to the outdoor air inlet 101 so that outdoor air introduced through the outdoor air inlet 101 sequentially passes through the light filter 45, the pre-filter 44, the HEPA filter, and the heat exchange element 42 and is then supplied to the indoor through the outdoor air discharge outlet 102.

Optionally, the ventilation apparatus 10 may further include an air cleaning module 30, and the air cleaning module 30 may be disposed between the evaporator 21 and the air purification module 40, or between the evaporator 21 and the suction fan module 19. That is, the air purification module 40, the air cleaning module 30, and the evaporator 21 may be disposed on a flow path through which outdoor air flows, and arrangement positions of these components may be appropriately selected according to a structure of the case, particularly the main case 100.

The fan module may be a centrifugal fan that sucks air in an axial direction and discharges the air in a radial direction, but is not limited thereto. When the fan module is the centrifugal fan, the outlet of the suction fan module 19 is directly connected to the outdoor air discharge outlet 102. Accordingly, a central axis of the outdoor air discharge flange 172 passes through a center of the outlet of the suction fan module 19. In another aspect, it may be described that a central axis of the outdoor air discharge flange 172 (or a central axis of the outdoor air discharge outlet) and a fan shaft of the suction fan module 19 are orthogonal to each other.

On the other hand, in order to make the ventilation apparatus 10 compact, or to secure a space inside the main case 100 in a state in which a standard of the housing 11 is fixed, a fan shaft of the exhaust fan module 20 may be disposed parallel to a central axis L1 of the indoor air exhaust flange 174 (or a central axis of the indoor air outlet). That is, a line L2 passing through a center of the outlet of the exhaust fan module 20 and the central axis L1 of the indoor air exhaust flange 174 may be designed to be orthogonal to each other. In addition, an exhaust air flow transition space 1060 is formed between the exhaust fan module 20 and the indoor air outlet 104.

In another expression, a mounting position of the exhaust fan module 20 is designed such that a central axis of the indoor air outlet 104 and a rotation axis of the exhaust fan module 20 are parallel to each other.

Meanwhile, inside the main case 100, an outdoor air flow path through which outdoor air flows and an indoor air flow path through which indoor air flows are formed in directions crossing each other. In addition, the air purification module 40 is disposed at a point where flows of indoor air and outdoor air cross each other. In addition, among the indoor air flow path, a first damper unit 22 is installed on an indoor air flow path connecting the indoor air inlet 103 and the air purification module 40. The first damper unit 22 allows indoor air introduced through the indoor air inlet 103 to selectively flow to either the air purification module 40 or a bypass flow path (to be described later). The bypass flow path is formed between the middle case 13 and the lower case 14, and details thereof will be described in more detail below.

In addition, a second damper unit 23 for switching a flow path is installed inside the main case 100 such that indoor air introduced through the indoor air inlet 103 and flowing toward the bypass flow path flows to the outdoor air flow path in which the evaporator 21 is installed. That is, the bypass flow path and the outdoor air flow path may be selectively connected by the second damper unit 23. Specifically, in a situation where rapid cooling is required, by operation of the second damper unit 23, indoor air introduced through the indoor air inlet 103 may pass through the evaporator 21 and then be discharged again to the indoor through the outdoor air discharge outlet 102.

Meanwhile, the ventilation apparatus 10 further includes a control box 18 that controls operations of various components accommodated inside the housing 11. The various components may include the fan modules 19 and 20, the damper units 22 and 23, the air cleaning module 30, and the light filter 45. In addition, the control box 18 may be mounted on a side surface of the housing 11, specifically on an indoor-side surface.

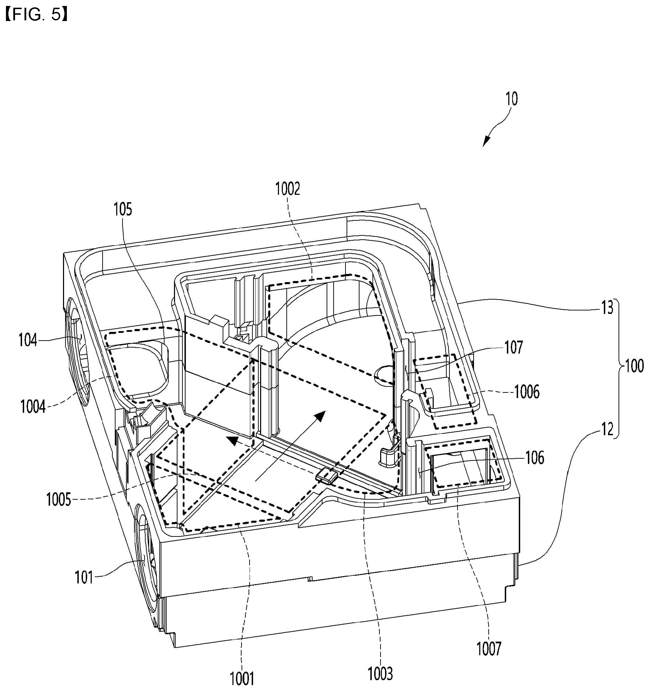

FIG. 5 is a bottom perspective view of a main case constituting a ventilation apparatus according to an embodiment of the present invention.

Referring to FIG. 5, the main case 100 may be understood as a combined body of the upper case 12 and the lower case 13 as described above.

Inside the main case 100, an outdoor air flow path and an indoor air flow path are formed in directions crossing each other. On one side surface of the main case 100, an outdoor air inlet 101 and an indoor air outlet 104 are formed, and on the other side surface, an indoor air inlet 103 and an outdoor air discharge outlet 102 are formed. Some of the four air passage holes 101 to 104 are formed on a side surface of the upper case 12 and the remaining ones are formed on a side surface of the lower case 13. When the lower case 13 and the upper case 12 are coupled, a complete circular hole is formed.

Inside the main case 100, a supply air introducing area 1001, a supply air discharge area 1002, an exhaust air introducing area 1003, an exhaust air exhausting area 1004, an air purification module mounting area 1005, a bypass guide area 1006, an exhaust air entrance area 1007, and the exhaust air flow transition space 1060 are respectively defined.

The indoor air inlet 103 is formed on one side surface of the main case 100 defining an edge of the exhaust air entrance area 1007, and a first damper hole 106 is formed on a side surface of the exhaust air entrance area 1007 corresponding to an opposite side of the indoor air inlet 103. In addition, the first damper unit 22 is mounted on the first damper hole 106.

In addition, one end of the bypass guide area 1006 is connected to a side surface of the exhaust air entrance area 1007 on which the first damper hole 106 is formed or to a side surface orthogonal to a side surface on which the indoor air inlet 103 is formed.

In addition, the air purification module mounting area 1005 is formed at a point where a supply air flow path and an exhaust air flow path cross each other. The air purification module mounting area 1005 has first to fourth side surfaces continuously formed corresponding to a shape of the air purification module 40.

The supply air introducing area 1001 is defined between the outdoor air inlet 101 and the first side surface of the air purification module mounting area 1005.

The exhaust air introducing area 1003 is defined between the exhaust air entrance area 1007 and the second side surface of the air purification module mounting area 1005. In addition, the exhaust air introducing area 1003 and the exhaust air entrance area 1007 are selectively communicated by operation of the first damper unit 22.

The bypass guide area 1006 connects the exhaust air entrance area 1007 and an inlet of a bypass flow path, and an outlet of the bypass flow path is connected to the exhaust air exhausting area 1004. The first side surface and the second side surface are adjacent to each other.

The supply air discharge area 1002 is defined between the supply air discharge outlet 102 and the third side surface of the air purification module mounting area 1005. A second damper hole 107 is formed on a boundary surface between the supply air discharge area 1002 and the bypass guide area 1006. The bypass guide area 1006 and the supply air discharge area 1002 are selectively communicated by operation of the second damper unit 23. The third side surface is located opposite to the first side surface.

In addition, the exhaust air exhausting area 1004 extends from the fourth side surface of the air purification module mounting area 1005 to the exhaust air flow transition space 1060. In addition, an exhaust fan mounting hole 105 is formed on a boundary surface separating the exhaust air exhausting area 1004 and the air purification module mounting area 1005, and an outlet of the exhaust fan module 20 is connected to the exhaust fan mounting hole 105.

The exhaust fan mounting hole 105 and the indoor air outlet 104 are formed on vertical planes crossing each other, so that indoor air flowing along the exhaust air exhausting area 1004 is discharged to the indoor air outlet 104 after a flow direction is switched in the exhaust air flow transition space 1060.

The exhaust air exhausting area 1004 and the supply air discharge area 1002 are partitioned by a flow separation wall, so that mixing of exhausted indoor air and introduced outdoor air is blocked.

The exhaust fan module 20 is disposed in the exhaust air exhausting area 1004, and the suction fan module 19 is disposed in the supply air discharge area 1002.

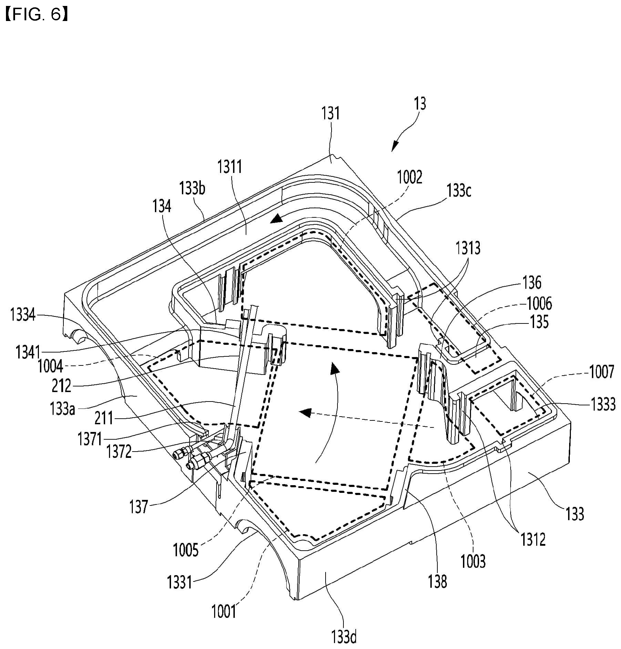

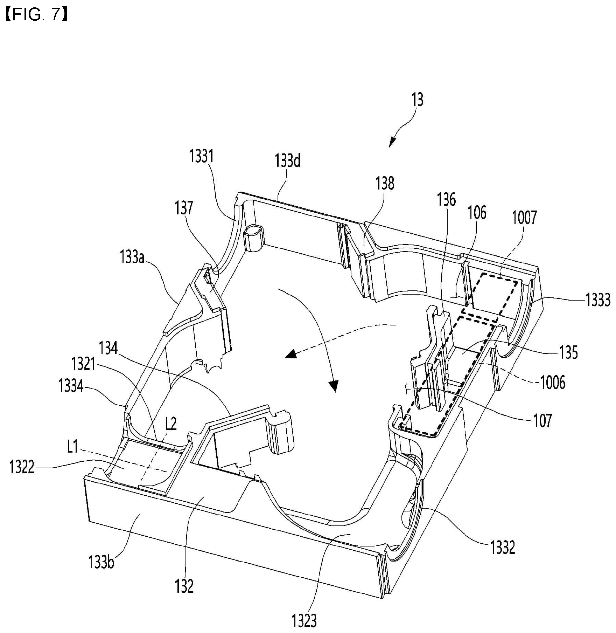

FIG. 6 is a bottom perspective view of a middle case constituting the main case of the ventilation apparatus according to an embodiment of the present invention, and FIG. 7 is a plan perspective view of the middle case.

Referring to FIGS. 6 and 7, the middle case 13 includes a bottom surface 131 to which an upper surface of the lower case 14 is coupled, an upper surface 132 to which a bottom surface of the upper case 12 is coupled, and side surfaces 133 connecting the upper surface 132 and the bottom surface 131.

The side surfaces 133 include a first surface 133a, a second surface 133b, a third surface 133c, and a fourth surface 133d. The first surface 133a and the third surface 133c face each other, and the second surface 133b and the fourth surface 133d face each other.

An outdoor air inlet groove 1331 and an indoor air outlet groove 1334 are formed on the first surface 133a, and an indoor air inlet groove 1333 and an outdoor air discharge groove 1332 are formed on the third surface 133c.

The outdoor air inlet groove 1331 forms half of the outdoor air inlet 101, and the indoor air outlet groove 1334 forms half of the indoor air outlet 104. The indoor air inlet groove 1333 forms half of the indoor air inlet 103, and the outdoor air discharge groove 1332 forms half of the outdoor air discharge outlet 102.

An upper bypass groove 1311 is formed at an edge of the bottom surface 131 of the middle case 13.

Specifically, an inlet end (one end) of the upper bypass groove 1311 forming a part of the bypass flow path is connected to the other end of the bypass guide area 1006. Indoor air flowing into the bypass guide area 1006 is guided to the upper bypass groove 1311 in a ventilation mode. In addition, an outlet end (the other end) of the upper bypass groove 1311 is connected to the exhaust air exhausting area 1004.

The upper bypass groove 1311 may be bent in an N-shape along an edge of the middle case 13 to surround an edge of a bottom surface of the supply air discharge area 1002.

An extension arm 135 extends by a predetermined length toward the first surface 133a with a predetermined width from an edge corresponding to a lower end of the second surface 133c among edges of the bottom surface 131 of the middle case 13. A flow guide wall 136 is formed at an end of the extension arm 135. The flow guide wall 136 extends by a predetermined length from both side ends of the extension arm 135 toward the second surface 133b and the fourth surface 133d, and extends by a predetermined height toward the upper surface 132 of the middle case 13. The flow guide wall 136 may extend to the same height as a height of the side surfaces 133.

The extension arm 135 separates a bottom surface of the bypass guide area 1006 and a bottom surface of the exhaust air entrance area 1007. In another aspect, it may be described that the bottom surface of the bypass guide area 1006 is reduced by a width of the extension arm 135.

A first damper mounting portion 1312 is recessedly formed on an inner edge of the fourth surface 133d corresponding to one side surface of the first damper hole 106 and on one side surface of the flow guide wall 136 corresponding to the other side surface of the first damper hole 106. In addition, both side surfaces of the first damper unit 22 are fitted into the first damper mounting portion 1312.

In addition, a second damper mounting portion 1313 is recessedly formed at an inlet end of the upper bypass groove 1311 corresponding to the other side surface of the second damper hole 107 and on the other side surface of the flow guide wall 136 corresponding to one side surface of the second damper hole 107. In addition, both side surfaces of the second damper unit 23 are fitted into the second damper mounting portion 1313.

An opposite end of the flow guide wall 136 contacts one of four corners of the air purification module 40 to support one corner of the air purification module 40.

Meanwhile, a lower flow separation wall 134 extends from an inner edge of the outlet end of the upper bypass groove 1311. The lower flow separation wall 134 forms a lower portion of the flow separation wall.

A pipe accommodating portion 1341 is formed on a bottom surface of the lower flow separation wall 134 to be stepped upward. A gas pipe 211 and a liquid pipe 212 extending from the evaporator 21 pass through the pipe accommodating portion 1341. That is, the gas pipe 211 and the liquid pipe 212 extend below the lower flow separation wall 134.

In addition, a pipe guide protrusion 137 protrudes from an inner surface of the first surface 133a. One side surface of the pipe guide protrusion 137 supports a side surface of the air purification module 40, and the other side surface forms a portion of an edge of the exhaust air exhausting area 1004.

A liquid pipe accommodating groove 1371 and a gas pipe accommodating groove 1372 are respectively formed on a bottom surface of the pipe guide protrusion 137. The liquid pipe 212 and the gas pipe 211 passing through the pipe accommodating portion 1341 of the lower flow separation wall 134 extend along the gas pipe accommodating groove 1372 and the liquid pipe accommodating groove 1371, respectively, and pass through the first surface 133a.

In addition, an air purification module support protrusion 138 protrudes from an inner surface of the fourth surface 133d, and one side surface of the air purification module support protrusion 138 supports a side surface of the air purification module 40, and the other side surface forms an edge of the exhaust air introducing area 1003.

One side surface of the air purification module support protrusion 138 is formed to face one side surface of the pipe guide protrusion 137.

Meanwhile, a suction fan accommodating groove 1323 is recessedly formed on one side of the upper surface 132 of the middle case 13. The suction fan accommodating groove 1323 is formed at a corner region where the second surface 133b and the third surface 133c meet. The outdoor air discharge groove 1332 formed on the third surface 133c communicates with the suction fan accommodating groove 1323.

In addition, an exhaust air flow transition surface 1322 defining a bottom surface of the exhaust air flow transition space 1060 is formed on the upper surface 132 corresponding to a corner region where the first surface 133a and the second surface 133b meet. In addition, an exhaust fan mounting wall defining one side surface of the flow transition space 1060 is formed on the upper surface of the middle case 13, and an exhaust fan mounting groove 1321 is formed in the exhaust fan mounting wall. The exhaust air outlet groove 1334 is formed on the first surface 133a. A line L2 passing through a center of the exhaust fan mounting groove 1321 and a line L1 passing through a center of the exhaust air outlet groove 1334 are orthogonal to each other. That is, indoor air introduced through the exhaust fan mounting groove 1321 is discharged to the outdoor through the exhaust air outlet groove 1334 after a flow is changed by 90 degrees.

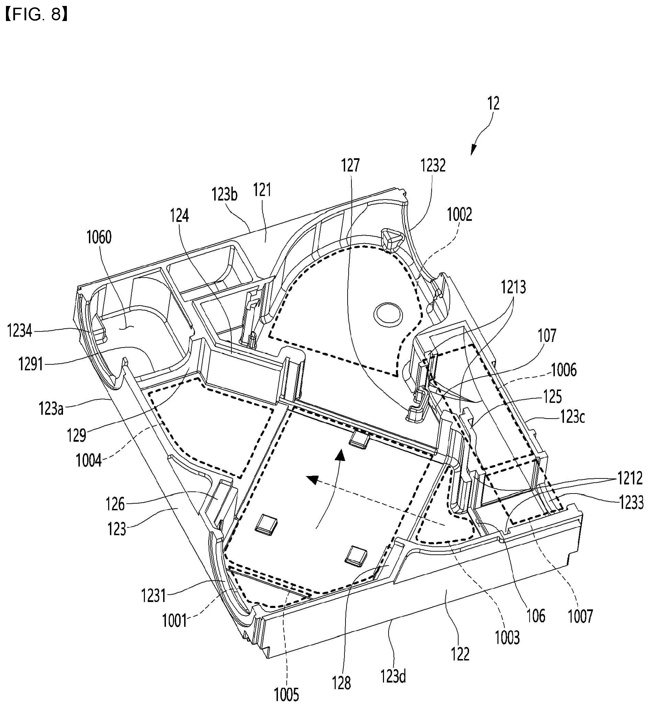

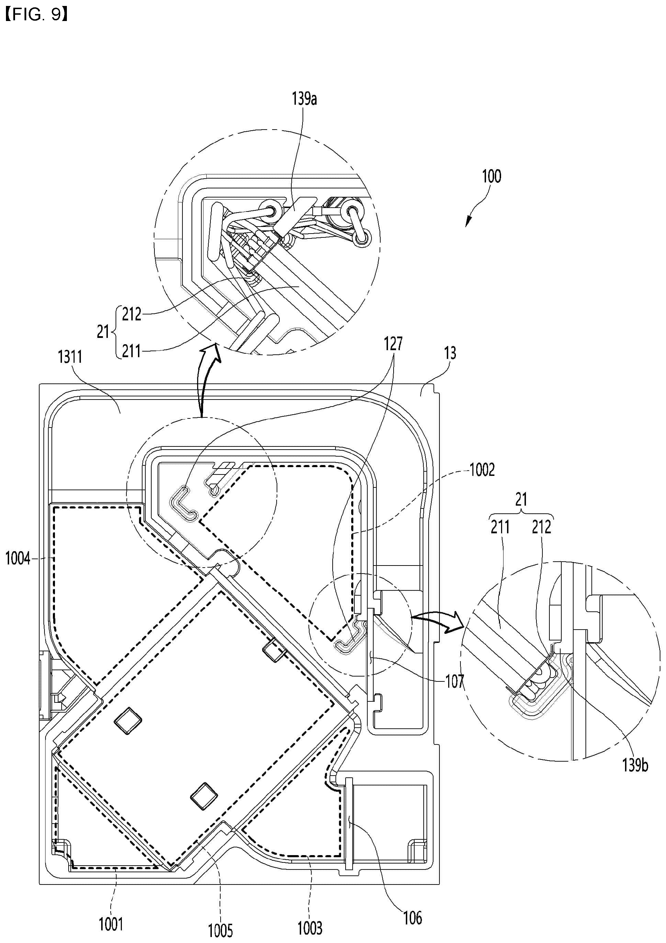

FIG. 8 is a bottom perspective view of an upper case constituting the main case of the ventilation apparatus according to an embodiment of the present invention, and FIG. 9 is a bottom view of the main case.

Referring to FIG. 8, the upper case 12 is placed on the upper surface of the middle case 13 to cover open regions formed inside the middle case 13. In addition, protruding walls corresponding to a shape of the upper surface of the middle case 13 extend from a bottom surface of the upper case 12.

Specifically, the upper case 12 includes a bottom surface 121 closely contacting the upper surface of the middle case 13, an upper surface 122 opposite to the bottom surface 121, and side surfaces 123 connecting the bottom surface 121 and the upper surface 122.

In addition, the side surfaces 123 include a first surface 123a, a second surface 123b, a third surface 123c, and a fourth surface 123d. The first surface 123a forms the same plane as the first surface 133a of the middle case 13, and the second surface 123b forms the same plane as the second surface 133b of the middle case 13. In addition, the third surface 123c forms the same plane as the third surface 133c of the middle case 13, and the fourth surface 123d forms the same plane as the fourth surface 133d of the middle case 13.

An outdoor air inlet groove 1231 and an indoor air outlet groove 1234 are respectively formed on the first surface 123a. The outdoor air inlet groove 1231 and the outdoor air inlet groove 1331 of the middle case 13 are combined to form a complete outdoor air inlet 101. The indoor air outlet groove 1234 and the indoor air outlet groove 1334 of the middle case 13 are combined to form a complete indoor air outlet 104.

An indoor air inlet groove 1233 and an outdoor air discharge groove 1232 are respectively formed on the third surface 123c. The indoor air inlet groove 1233 and the indoor air inlet groove 1333 of the middle case 13 are combined to form a complete indoor air inlet 103. The outdoor air discharge groove 1232 and the outdoor air discharge groove 1332 of the middle case 13 meet to form a complete outdoor air discharge outlet 102.

A first air purification module support protrusion 126 protrudes from an inner surface of the first surface 123a, and the first air purification module support protrusion 126 is in close contact with the pipe guide protrusion 137 of the middle case 13.

A flow path transition space 106 is recessedly formed in a bottom corner region of the upper case 12 where the indoor air outlet groove 1234 is formed. When the upper case 12 is coupled to the upper surface of the middle case 13, the exhaust air flow transition surface 1322 forms a bottom surface of the flow path transition space 106.

In addition, an exhaust fan mounting wall 129 defining one side surface of the flow path transition space 106 is formed on the bottom surface of the upper case 12, and an exhaust fan mounting groove 1291 is formed in the exhaust fan mounting wall 129. In addition, the exhaust fan mounting groove 1321 of the middle case 13 and the exhaust fan mounting groove 1291 are combined to form a complete exhaust fan mounting hole 105.

An upper flow separation wall 124 extends in a diagonal direction from a bottom surface of the upper case 12 corresponding to a corner portion of the flow path transition space 106, and the upper flow separation wall 124 is in close contact with the lower flow separation wall 134 of the middle case 13 to complete a full flow separation wall. An end of the flow separation wall functions as a module support wall supporting one corner of the air purification module 40.

On a bottom surface of the upper case 12 corresponding to directly above the supply air introducing area 1001, the supply air discharge area 1002, the exhaust air introducing area 1003, the exhaust air exhausting area 1004, the air purification module mounting area 1005, the bypass guide area 1006, and the exhaust air entrance area 1007 formed in the middle case 13, areas having the same shape and size as the supply air introducing area 1001, the supply air discharge area 1002, the exhaust air introducing area 1003, the exhaust air exhausting area 1004, the air purification module mounting area 1005, the bypass guide area 1006, and the exhaust air entrance area 1007 are formed.

A flow guide wall 125 closely contacting the flow guide wall 136 of the middle case 13 protrudes from the bottom surface of the upper case 12. In addition, a first damper mounting portion 1212 is recessedly formed at a position corresponding to the first damper mounting portion 1312 of the middle case 13, and a second damper mounting portion 1213 is recessedly formed at a position corresponding to the second damper mounting portion 1313 of the middle case 13. That is, the first damper mounting portion 1212 is formed at one end of the flow guide wall 125, and the second damper mounting portion 1213 is formed at the other end.

Meanwhile, as shown in FIG. 3, the evaporator 21 is disposed between the air purification module 40 and the suction fan module 19, an upper surface of the evaporator 21 is shielded by the upper case 12, and a drain pan 24 to be described later is placed on a lower surface thereof.

Evaporator support ribs 127 respectively protrude from a bottom surface of the upper case 12 corresponding to two short-side edges among upper surface edges of the evaporator 21.

Referring to FIG. 9, the two evaporator support ribs 127 protrude from an inletside edge point of the outdoor air discharge area 1002. In addition, each of the evaporator support ribs 127 is formed to be bent multiple times so as to surround an upper surface edge of the evaporator 21.

Meanwhile, the evaporator 21 includes an evaporator main body 211 including an evaporation pipe and heat exchange fins, and a support channel 212 mounted on a side surface of a short side portion of the evaporator main body 211 to support the evaporation pipe.

The support channel 212 has a cross-sectional shape bent in an approximately n-shape, and a channel support wall 139b supporting the support channel 212 may be formed at an inner edge of an inlet end of the upper bypass groove 1311. That is, one of the two support channels 212 is supported by the channel support wall 139b. The channel support wall 139b is formed at a position adjacent to one of the two evaporator support ribs 127.

A channel support wall 139a may also be formed at a position adjacent to the other one of the two evaporator support ribs 127. In addition, an end of the other one of the two support channels 212 may be fixed in close contact with the channel support wall 139a.

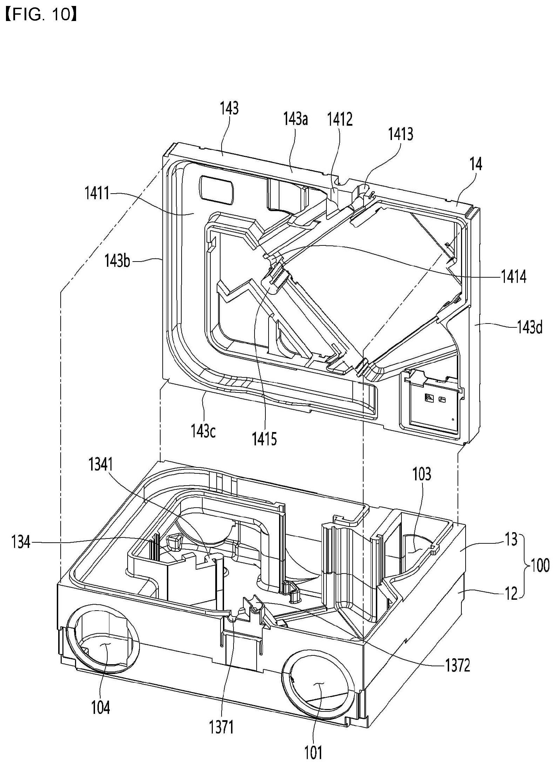

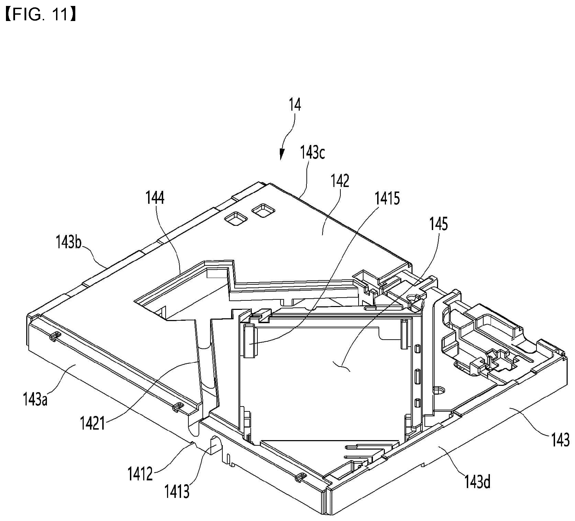

FIG. 10 is a view showing a state in which a lower case is separated from a main case from a bottom surface, and FIG. 11 is a bottom perspective view of the lower case.

Referring to FIGS. 10 and 11, a case of a ventilation apparatus 10 according to an embodiment of the present invention includes a main case 100 and a lower case 14 coupled to a bottom surface of the main case 100. Specifically, the main case 100 is defined as a combination of the upper case 12 and the middle case 13, and the lower case 14 is coupled to a bottom surface of the middle case 13.

The lower case 14 includes, similarly to the upper case 12 or the middle case 13, an upper surface 141, a bottom surface 142, and side surfaces 143, and the side surfaces 143 include a first surface 143a, a second surface 143b, a third surface 143c, and a fourth surface 143d.

Each of the first to fourth surfaces 143a to 143d forms the same plane as each of the first to fourth surfaces 123a to 123d of the upper case 12 and each of the first to fourth surfaces 133a to 133d of the middle case 13.

A lower bypass groove 1411 coupled to the upper bypass groove 1311 of the middle case 13 is formed on the upper surface of the lower case 14, and the upper bypass groove 1311 and the lower bypass groove 1411 are combined to form a complete bypass flow path.

An air purification module insertion hole 145 and a drain pan mounting hole 144 are formed in the lower case 14.

A module support wall 1415 extends on the upper surface 141 corresponding to one corner of the air purification module insertion hole 145, and the module support wall 1415 contacts a lower surface of an end of the flow separation wall. Specifically, when the lower case 14 is coupled to the bottom surface of the middle case 13, the module support wall 1415 contacts a lower surface of an end of the lower flow separation wall 134 of the middle case 13. Here, an end of the module support wall 1415 contacts a portion excluding the pipe accommodating portion 1341 so as not to interfere with the gas pipe 211 and the liquid pipe 212 passing through the pipe accommodating portion 1341.

A pipe accommodating groove 1414 is recessedly formed at a point of the upper surface 141 corresponding directly below the pipe accommodating portion 1341 to accommodate the liquid pipe 212 and the gas pipe 211.

A gas pipe accommodating groove 1413 and a liquid pipe accommodating groove 1412 are respectively recessedly formed at an upper end of the first surface 143a of the lower case 14 corresponding to the first surface 133a of the middle case 13, and are coupled to the liquid pipe accommodating groove 1371 and the gas pipe accommodating groove 1372 of the middle case 13.

Meanwhile, a drain pipe accommodating groove 1421 is recessedly formed on the bottom surface of the lower case 14, one end of the drain pipe accommodating groove 1421 is connected to the drain pan mounting hole 144, and the other end extends to the side surface 143 of the lower case 14. For example, the other end of the drain pipe accommodating groove 1421 may extend to the first surface 143a.

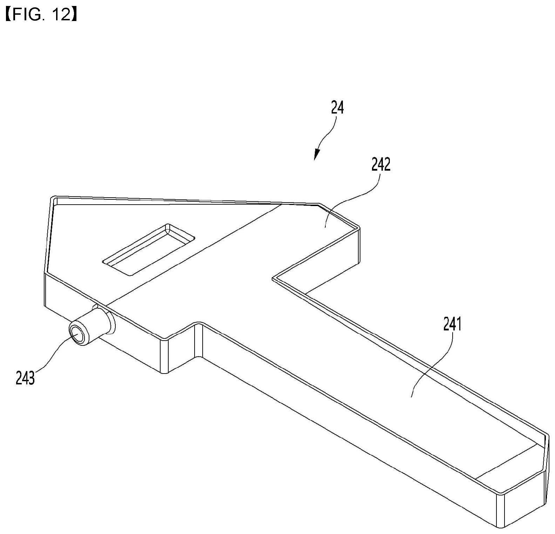

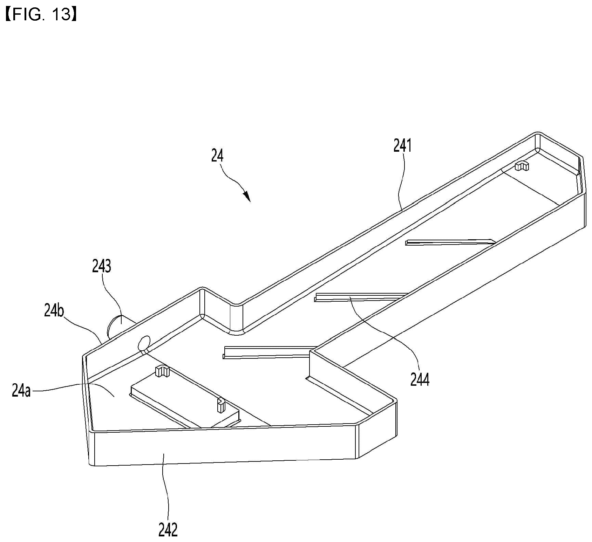

FIG. 12 is a bottom perspective view of a drain pan coupled to the lower case of the ventilation apparatus according to an embodiment of the present invention, and FIG. 13 is a plan perspective view of the drain pan.

Referring to FIGS. 12 and 13, a drain pan 24 of the ventilation apparatus 10 according to an embodiment of the present invention is coupled to the drain pan mounting hole 144 formed in the lower case 14 to cover the drain pan mounting hole 144.

An evaporator 21 is disposed on an upper surface of the drain pan 24 so that condensed water flowing down from the evaporator 21 is collected in the drain pan 24.

Specifically, the drain pan 24 includes an evaporator seating portion 241, a condensed water collecting portion 242 formed at one end of the evaporator seating portion 241, and a drain port 243 extending from one side edge of the condensed water collecting portion 242.

The drain pan 24 includes a bottom portion 24a on which condensed water falls and a side portion 24b erected along an edge of the bottom portion 24a, and the drain port 243 may protrude by a predetermined length from the side portion 24b.

A plurality of flow guides 244 protrudes from the bottom portion 24a so that condensed water flowing down from the evaporator 21 may be guided toward the drain port 243. The drain port 243 is connected to the drain pipe accommodating groove 1421 of the lower case.

Hereinafter, a filtering kit for preventing foreign substances including insects from being introduced through the outdoor air inlet 101, and a method for emptying foreign substances collected in the filtering kit will be described in detail with reference to the drawings.

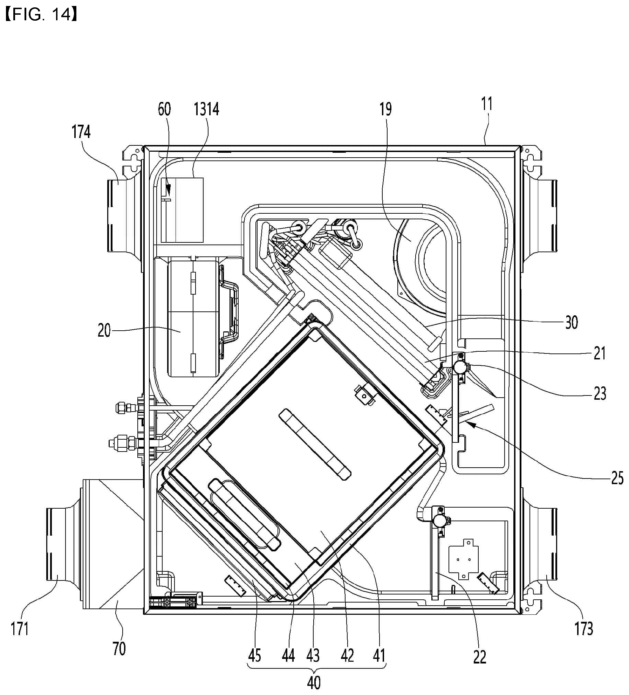

FIG. 14 is a plan view showing a ventilation apparatus according to an embodiment of the present invention in which a filtering kit is mounted at an outdoor air inlet.

Referring to FIG. 14, the filtering kit 70 according to an embodiment of the present invention for filtering foreign substances is mounted at the outdoor air inlet 101 of the ventilation apparatus 10. In addition, an outdoor air inlet flange 171 is mounted at an intake side of the filtering kit 70. Accordingly, outdoor air is introduced into the air purification module 40 through the outdoor air inlet flange 171 and the filtering kit 70.

Specifically, according to an embodiment of the present invention, in order to empty foreign substances collected in the filtering kit 70 to the outside, forced flow of indoor air is required. For this purpose, a bypass hole 1314 is formed at a point corresponding to one end of the bypass flow path, specifically at an end of the upper bypass groove 1311 formed in the middle case 13.

The bypass hole 1314 communicates with the exhaust flow switching space 1060 (see FIG. 4). That is, the bypass hole 1314 is formed by cutting a portion of the upper bypass groove 1311 defining a lower surface of the exhaust flow switching space 1060 in a state where the ventilation apparatus 10 is installed indoors.

In addition, a switching damper module 60 is installed in the exhaust flow switching space 1060, so that the bypass hole 1314 and the indoor air outlet 104 are selectively opened and closed. That is, in a normal operation mode of the ventilation apparatus 10, the bypass hole 1314 is blocked and the indoor air outlet 104 is opened by the switching damper module 60. On the other hand, in a so-called foreign substance cleaning mode or foreign substance removal mode for removing foreign substances collected in the filtering kit 70, the bypass hole 1314 is opened and the indoor air outlet 104 is blocked by the switching damper module 60.

In addition, a sub damper unit 25 is installed in the second damper unit 23, so that the bypass flow path and the air purification module 40 are fluidly communicated. In addition, the first damper unit 22 operates so that indoor air flows into the air purification module 40.

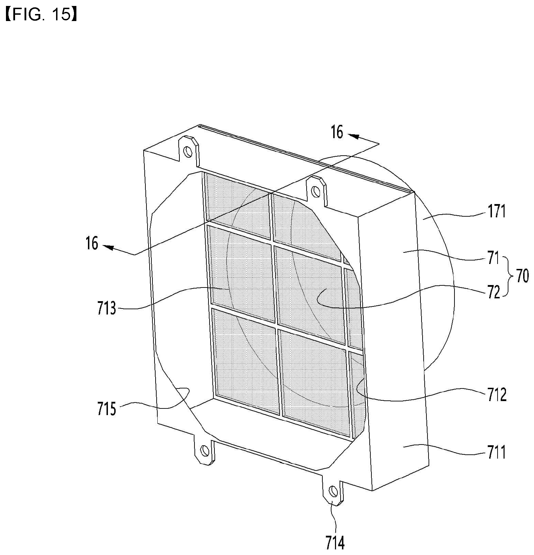

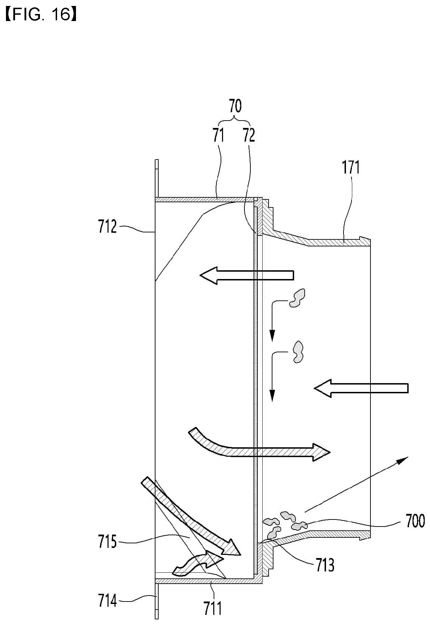

FIG. 15 is a rear perspective view of a filtering kit according to an embodiment of the present invention, and FIG. 16 is a longitudinal cross-sectional view of the filtering kit taken along line 16-16 of FIG. 15.

Referring to FIGS. 15 and 16, the filtering kit 70 according to an embodiment of the present invention includes a filter frame 71 and a filter 72 coupled to an inner side of the filter frame 71.

The filter frame 71 may have a flat hexahedral shape as illustrated, but is not limited thereto, and may also have a polygonal column shape or a cylindrical shape.

The filter frame 71 includes a frame body 711 having a hexahedral shape, a rear opening 712 formed at a rear surface of the frame body 711, and a front opening 713 formed at a front surface of the frame body 711.

The rear opening 712 may have the same shape as the outdoor air inlet 101, and the front opening 713 may have the same shape as an outlet end of the outdoor air inlet flange 171.

Specifically, the filter 72 may be mounted on a front surface of the filter frame 71 corresponding to a boundary surface between the outdoor air inlet flange 171 and the filter frame 71. The filter 72 is formed of a mesh, and support ribs may be provided in a grid shape to prevent sagging of the filter.

A plurality of fastening flanges 714 may extend from a rear edge of the frame body 711, and a plurality of flow guide surfaces 715 may be formed inside the frame body 711. The plurality of flow guide surfaces 715 may be formed to be inclined at corner portions of the frame body 711, and may be inclined in a form expanding from the rear surface toward the front surface of the frame body 711. According to this structure, outdoor air introduced through the outdoor air inlet flange 171 flows along the flow guide surfaces and is concentrated toward the outdoor air inlet 101, thereby reducing flow loss. The flow guide surfaces 715 may be formed only at inner corner portions of the frame body 711, and may also have a truncated cone shape.

In addition, when the filtering kit 70 is installed at the outdoor air inlet 101, the air purification module 40 may not include the pre-filter 44.

The filter 72 is erected at a boundary surface between the outdoor air inlet flange 171 and the frame body 711, so that foreign substances introduced through the outdoor air inlet flange 171 are accumulated at a lower portion of the outdoor air inlet flange 171. In other words, foreign substances are prevented from being introduced into the frame body 711.

When a foreign substance cleaning mode for discharging foreign substances is started, the exhaust fan module 20 operates so that indoor air is forcibly flowed toward the outdoor air inlet flange 171. Accordingly, foreign substances accumulated at the bottom of the outdoor air inlet flange 171 are discharged to the outside together with indoor air discharged to the outside through the outdoor air inlet flange 171, and foreign substances caught in the filter 72 are separated, thereby cleaning the filter 72.

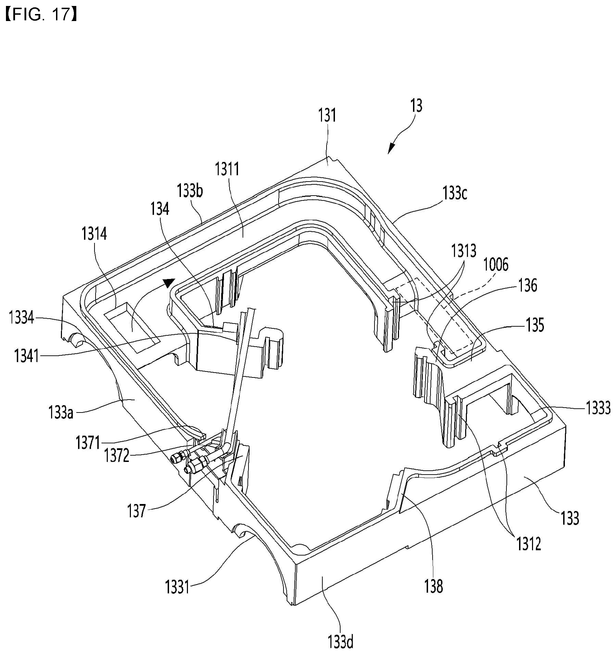

FIG. 17 is a bottom perspective view of a middle case in which a bypass hole is formed.

Referring to FIG. 17, as described above, the bypass hole 1314 is formed at one end of the upper bypass groove 1311 defining a part of the bypass flow path.

Specifically, the bypass hole 1314 is formed by cutting a portion of the upper bypass groove 1311 forming the exhaust flow switching space 1060. When the foreign substance cleaning mode is started, indoor air forcibly flowing by the exhaust fan module 20 flows backward along the bypass flow path through the bypass hole 1314 and flows toward the bypass guide region 1006.

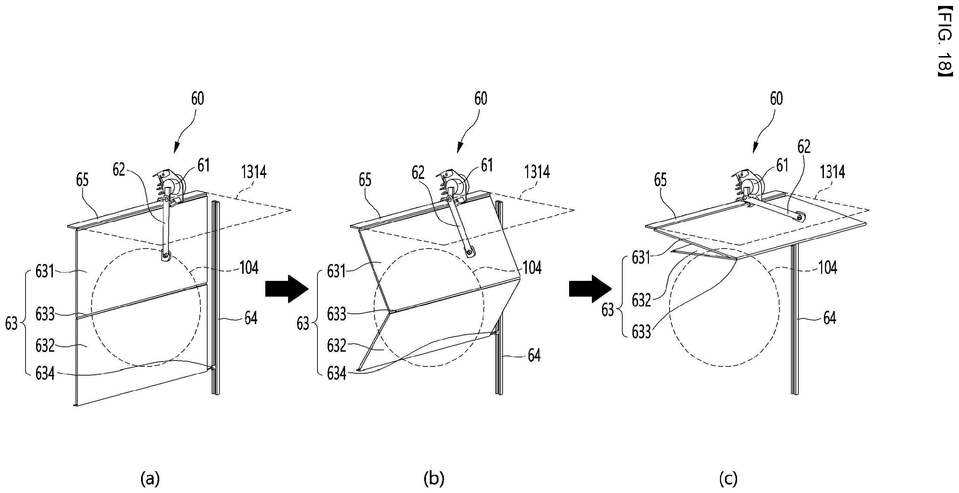

FIG. 18 is a perspective view showing a structure and an operation of a switching damper module selectively blocking the bypass hole and the indoor air outlet.

In FIG. 18, (a) shows a state in which the switching damper module 60 blocks the indoor air outlet 104 and opens the bypass hole 1314, (c) shows a state in which the switching damper module 60 opens the indoor air outlet 104 and blocks the bypass hole 1314, and (b) shows an operation for switching a state of the switching damper module 60.

Specifically, the switching damper module 60 includes a fixed bracket 65, a damper motor 61 mounted on the fixed bracket 65, a link 62 having one end connected to a rotating shaft of the damper motor 61, a switching damper 63 rotatably connected to the fixed bracket 65, and a guide rail 64 guiding movement of the switching damper 63.

The fixed bracket 65 is fixed to one surface of the middle case 13 corresponding to an edge of the bypass hole 1314, and the guide rail 64 is erected at an inner edge of the exhaust flow switching space 1060.

In addition, the switching damper 63 includes an upper damper 631 having one end rotatably connected to the fixed bracket 65, a lower damper 632 having one end rotatably connected to the other end of the upper damper 631, a damper hinge 633 connecting the upper damper 631 and the lower damper 632, and a damper guide 634 extending from an edge of the other end of the lower damper 632 and inserted into the guide rail 64.

The upper damper 631 and the damper motor 61 may be fixed to one surface of the middle case 13 corresponding to an edge of the bypass hole 1314, and in this case, the fixed bracket 65 may not be required.

An other end of the link 62 is connected to the upper damper 631, so that as the damper motor 61 rotates, the link 62 rotates about the rotating shaft of the damper motor 61 to raise or lower the upper damper 631.

As shown in FIG. 18(b), as the link 62 rotates and the other end of the upper damper 631 rises, the damper guide 634 rises along the guide rail 64. In addition, the lower damper 632 rotates about the damper hinge 633 so that the switching damper 63 is folded in a horizontal state.

When the switching damper 63 is maximally folded, the bypass hole 1314 is closed by the upper damper 631, and when the switching damper 63 is completely unfolded, the indoor air outlet 104 is closed.

When the foreign substance cleaning mode is selected, the switching damper 63 maintains a fully unfolded state, so that air forcibly flowing by the exhaust fan module 20 flows into the bypass flow path through the bypass hole 1314.

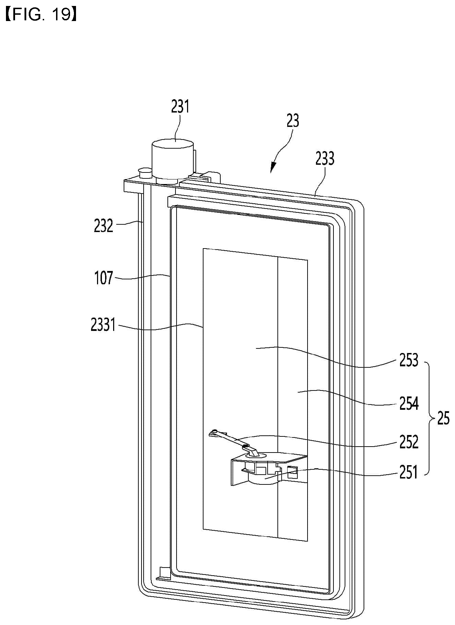

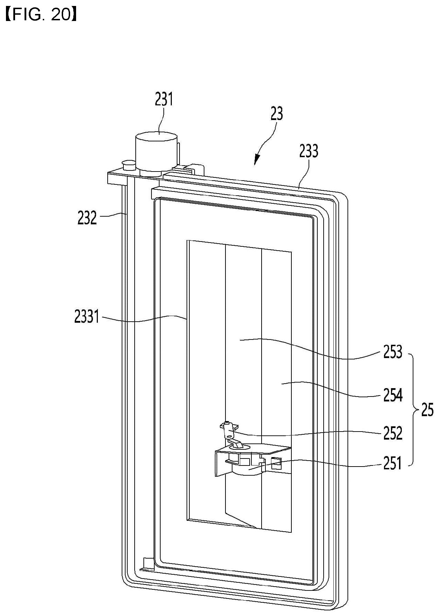

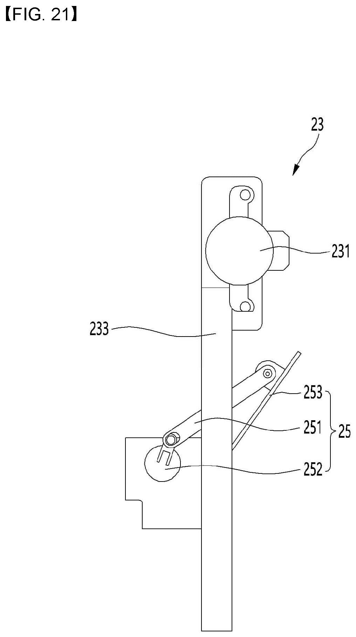

FIG. 19 is a perspective view of a second damper unit showing a state in which a sub bypass hole formed in the second damper unit is closed by a sub damper unit according to an embodiment of the present invention, FIG. 20 is a perspective view showing a state in which the sub bypass hole is opened by the sub damper unit, and FIG. 21 is a side view of the second damper unit in a state in which the sub bypass hole is opened.

Referring to FIGS. 19 to 21, the second damper unit 23 includes a damper frame 232 in which a second damper hole 107 is defined, a damper motor 231 mounted on one edge of the damper frame 232, and a second damper 233 which rotates by the damper motor 231 to open and close the second damper hole 107.

The second damper hole 107 described in FIG. 5 may be understood as a communication hole that fluidly connects the bypass guide region 1006 and a region in which the air purification module 40 or the evaporator 21 is installed.

A sub bypass hole 2331 is formed in the second damper 233, and the sub bypass hole 2331 is selectively opened and closed by the sub damper unit 25.

Specifically, the sub damper unit 25 includes a fixed bracket 254 fixed to one surface of the second damper 233 corresponding to an edge of the sub bypass hole 2331, a sub damper motor 251 mounted on the fixed bracket 254, a link 252 having one end connected to a rotating shaft of the sub damper motor 251, and a sub damper 253 having one end rotatably connected to the fixed bracket 254 and another end connected to the link 252.

The sub damper 253 is rotatably connected to one edge of the sub bypass hole 2331, and the sub damper motor 251 is fixed to the second damper 233, so that the fixed bracket 254 may not be required.

When the foreign substance cleaning mode is selected, as shown in FIGS. 20 and 21, the sub damper motor 251 operates in a state in which the second damper 233 closes the second damper hole 107. Accordingly, the sub damper 253 rotates to open the sub bypass hole 2331, so that the bypass guide region 1006 and the air purification module 40 are fluidly communicated with each other.

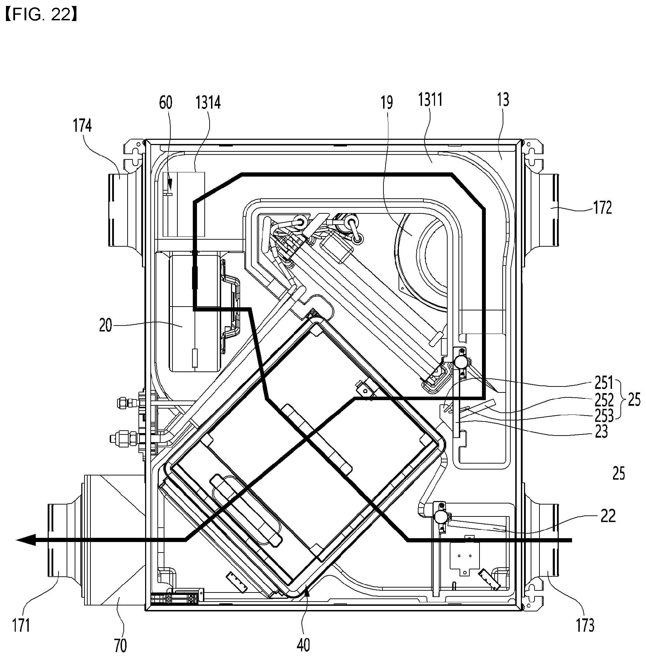

FIG. 22 is a view showing an air flow occurring inside the ventilation apparatus in a foreign substance cleaning mode.

Referring to FIG. 22, when the foreign substance cleaning mode is executed to clean foreign substances accumulated in the filtering kit 70, the first damper unit 22 opens the first damper hole 106. In addition, the sub damper unit 25 operates to open the sub bypass hole 2331. In addition, the switching damper module 60 operates to close the indoor air outlet 104 and open the bypass hole 1314.

In this state, the exhaust fan module 20 operates so that indoor air is introduced into the air purification module 40 through the indoor air inlet flange 173, and indoor air passing through the air purification module 40 is guided to the exhaust flow switching space 1060 by the exhaust fan module 20.

Indoor air guided to the exhaust flow switching space 1060 passes through the bypass hole 1314 and flows into the bypass flow path. Indoor air flowing along the bypass flow path reaches the bypass guide region 1006, and indoor air guided to the bypass guide region 1006 passes through the sub bypass hole 2331 and then flows into the air purification module 40.

Indoor air passing through the air purification module 40 sequentially passes through the outdoor air inlet 101, the filtering kit 70, and the outdoor air inlet flange 171 and is discharged to the outside. At this time, foreign substances accumulated at the bottom of the outdoor air inlet flange 171 and foreign substances caught in the filter 72 are discharged to the outside together with the indoor air.

Meanwhile, in order to separate foreign substances caught in the filter 72 and to quickly discharge foreign substances accumulated inside the outdoor air inlet flange 171 to the outside, the exhaust fan module 20 may be controlled to rotate at a high speed for a set time.

## Claims

1. A ventilation apparatus, comprising:
a main case in which an outdoor air inlet and an indoor air outlet are formed on one side, and an indoor air inlet and an outdoor air outlet are formed on another side opposite to the one side;
an air purification module accommodated inside the main case and including a total heat exchange element;
an intake fan module disposed inside the main case and having a discharge port connected to the outdoor air outlet;
an exhaust fan module disposed inside the main case and having a discharge port connected to the indoor air outlet; and
a filtering kit mounted on the other side of the main case where the outdoor air inlet is formed and communicating with the outdoor air inlet,
wherein inside the main case,
an indoor air exhaust flow path connecting the indoor air inlet, the air purification module, the exhaust fan module, and the indoor air outlet;
a bypass flow path connecting the indoor air inlet and the exhaust fan module;
an outdoor air intake flow path connecting the outdoor air inlet, the air purification module, the intake fan module, and the outdoor air outlet;
an exhaust flow switching space defined between the discharge port of the exhaust fan module and the indoor air outlet;
a bypass hole connecting the exhaust flow switching space and one end of the bypass flow path; and
a sub bypass hole connecting another end of the bypass flow path and the outdoor air intake flow path are formed.

2. The ventilation apparatus of claim 1, further comprising a switching damper module provided in the exhaust flow switching space and configured to selectively open and close the indoor air outlet and the bypass hole.

3. The ventilation apparatus of claim 2, wherein, in a mode for removing foreign substances collected in the filtering kit, the switching damper module operates to open the bypass hole and close the indoor air outlet.

4. The ventilation apparatus of claim 3, wherein the switching damper module comprises:
a damper motor;
a link having one end connected to a rotating shaft of the damper motor; and
a switching damper having one end rotatably connected to an edge of the bypass hole and having another end connected to the link.

5. The ventilation apparatus of claim 4, wherein the switching damper comprises:
an upper damper having one end rotatably connected to the edge of the bypass hole; and
a lower damper rotatably connected to another end of the upper damper,
wherein the other end of the link is connected to the upper damper.

6. The ventilation apparatus of claim 5, wherein the switching damper module further comprises:
a damper guide extending from a side end of the lower damper; and
a guide rail erected at a side of the switching damper and to which the damper guide is slidably connected.

7. The ventilation apparatus of claim 6, wherein the switching damper is configured to:
close the indoor air outlet in a fully unfolded state, and
close the bypass hole in a fully folded state.

8. The ventilation apparatus of claim 3, further comprising:
a first damper unit configured to selectively open and close a flow path connecting the indoor air inlet and the air purification module among the indoor air exhaust flow path; and
a second damper unit disposed at a boundary between a flow path connecting the indoor air inlet and the other end of the bypass flow path and the outdoor air intake flow path,
wherein the second damper unit operates such that indoor air sucked through the indoor air inlet flows to one of the bypass flow path and the outdoor air intake flow path.

9. The ventilation apparatus of claim 8, wherein the second damper unit comprises:
a damper frame in which a damper hole is formed;
a damper rotatably connected to the damper frame; and
a damper motor rotating the damper,
wherein the sub bypass hole is formed in the damper.

10. The ventilation apparatus of claim 9, further comprising a sub damper unit configured to selectively open and close the sub bypass hole.

11. The ventilation apparatus of claim 10, wherein the sub damper unit comprises:
a sub damper rotatably connected to an edge of the sub bypass hole;
a sub damper motor driving the sub damper; and
a link connecting a rotating shaft of the sub damper motor and the sub damper.

12. The ventilation apparatus of any one of claims 1 to 11, wherein the filtering kit comprises:
a filter frame having a rear surface coupled to the outdoor air inlet; and
a filter coupled to a front surface of the filter frame,
wherein an outdoor air inlet flange is coupled to the front surface of the filter frame.

13. The ventilation apparatus of claim 12, wherein a rear opening communicating with the outdoor air inlet is formed at the rear surface of the filter frame, and
a front opening communicating with the outdoor air inlet flange is formed at the front surface of the filter frame.

14. The ventilation apparatus of claim 13, wherein a flow guide surface is formed inside the filter frame to be inclined.

15. The ventilation apparatus of claim 11, wherein, when a mode for removing foreign substances collected in the filtering kit and the outdoor air inlet flange is executed,
the exhaust fan module operates,
the first damper unit operates such that indoor air sucked through the indoor air inlet passes through the air purification module and is then sucked into the exhaust fan module, and
wherein the indoor air sucked into the exhaust fan module passes through the exhaust flow switching space, the bypass hole, the bypass flow path, and the sub bypass hole in sequence and is then introduced into the air purification module, and
air introduced into the air purification module passes through the filtering kit and the outdoor air inlet flange in sequence and is discharged to the outside.
